# EUROPEAN PATENT APPLICATION

(11) **EP 1 057 409 A1**
(43) Date of publication of application: **06.12.2000**
(21) Application number: 00201720.0
(22) Date of filing: 15.05.2000
(51) Int. Cl.: A22C 7/00

(54) **Method for manufacturing a co-extruded food product, and co-extruded food product**

(30) Priority: 03.06.1999 NL 1012225
(71) Applicant: Stork MPS B.V., 5200 BN 's-Hertogenbosch (NL)
(72) Inventor: Bergmans, Peter Johannes Christoffel Maria, 4854 MH Bavel (NL); van den Dungen, Wilhelmus Johannes Everardus Maria, 5464 PK Veghel (NL)
(74) Representative: Van den Heuvel, Henricus Theodorus

(57) **Abstract**

Described is a method for manufacturing a co-extruded food product, in particular sausage. A food product is herein extruded such that the fibres of a first part thereof are randomized, while the fibres of a second part are substantially aligned. One of the parts is herein enclosed by the other part and the enclosed part is positioned substantially eccentrically.

There is also described a device for manufacturing extruded food products. This device comprises at least extrusion means for forming a continuous string of a food product. The extrusion means comprise at least one pipe (2) which is coupled to displacing means. The pipe (2) comprises an outer pipe (4) and an inner pipe (5) and the outer pipe (4) and the inner pipe (5) are initially separate pipes (4A, 5A).

## Description

The present invention relates to a method for manufacturing an extruded food product, in particular sausage, wherein a food product is extruded such that the fibres of a first part thereof are randomized, while the fibres of a second part are substantially aligned.

Such a method is for instance known from the European patent application EP-A-0 720 816. In the method according to this application a sausage product is manufactured which displays a natural curve and an extrusion pipe is employed in which is situated a local constriction so that a part of a flow of sausage dough is forced through the constriction while the remaining part follows the unimpeded path through the extrusion pipe. In the part of the flow of sausage dough which is forced through the constriction a randomizing of the fibres takes place, while in the remaining part an aligning of the fibres occurs. The placing of the constriction in the pipe and the dimension thereof are such that a large portion of the finally obtained sausage comprises randomized fibres, while a markedly smaller portion of the sausage, which is as it were placed against it, comprises aligned fibres.

The use of meat masses with different fibre arrangement can result in the sausage, under the influence of a further temperature treatment, not being completely straight but acquiring a slightly curved form.

The sausage extruded according to the above stated method is provided with a casing. Casings round food products can be arranged in different ways. It is known to extrude a food product in a pre-formed casing. Such a casing can for instance comprise cellulose or a pre-formed collagen skin. Another known method is co-extruding a collagen layer round the food product simultaneously with extrusion of the food string. In addition, a food mass for extruding or the outside of an extruded food mass can be placed in contact with an edible acid which reacts with the proteins in the food mass and forms a skin.

The sausage obtained by means of the above stated method has a number of drawbacks however. Because two flows of sausage dough of different fibre arrangement are as it were placed against each other, the final sausage does not have the desired round shape but has a local thickening. This thickened portion is caused because the respective sausage doughs have a different expansion behaviour at an increased temperature. The meat masses of the two sausage dough flows are moreover found not to bond well with each other. Finally, a seam is visible on the outer surface of the sausage at the boundary surface of the meat masses with differing fibre arrangement.

The present invention has for its object to obviate the above stated drawbacks and provides for this purpose a method according to the preamble which is characterized in that one of the parts of the food product is enclosed by the other part and that the enclosed part is positioned substantially eccentrically.

Due to the complete enclosure of the part with randomized fibres by the part with aligned fibres, or vice versa, the drawbacks which occur in the food product manufactured according to the prior art method are avoided. The food product obtained using the method according to the present invention has a round shape without local thickened portions occurring therein. Because the one part is enclosed by the other part with different fibre arrangement, the contact surface between the two parts, and thereby the possibility of mutual bonding, is much greater. But even if there is little mutual bonding, the food product obtained using the method according to the present invention still retains its cohesion. There are furthermore no seams situated on the outer surface of the food product.

The substantially eccentric positioning of the enclosed part in the string of food product results in a curved product being obtained as a consequence of coagulation of proteins and shrinkage of fibres in the food product, this occurring when the proteins in the product undergo a temperature of 60-65°C.

In preference the first part of the food product with randomized fibres is substantially enclosed by the second part with aligned fibres.
With such an arrangement a food product is found to be finally obtained which has a curve and looks as if it is a food product manufactured with natural intestine.

In particular, the ratio of food product with random fibres to food product with aligned fibres amounts to 1:1.5 to 1:10.

The first part and the second part of the food product are advantageously supplied separately. Because the supply speeds of the first part and the second part can preferably also be adjusted separately, an independent control of the different flows is possible. The occurrence of displacement immediately after exit from the extrusion pipe can hereby be prevented, which enhances the mutual bonding of the extruded food flows.

By furthermore increasing the power of the pumping means coupled to the extrusion pipe a sausage with a larger diameter can be obtained.

The present invention also relates to a device for manufacturing extruded food products, in particular sausage, at least comprising extrusion means for forming a continuous string of a food product, which extrusion means comprise at least one pipe which is coupled to displacing means.

This device is characterized in that the pipe comprises an outer pipe and an inner pipe and in that the outer pipe and the inner pipe are initially separate pipes.

In contrast to the device described in EP-A-0 720 816, wherein the extrusion pipe comprises a local constriction, the extrusion pipe in the device according to the present invention comprises an outer pipe and an inner pipe which are initially separated pipes.

The inner pipe is herein preferably provided with a local constriction in order to achieve that during extrusion of a food product mass the fibres are hereby randomized.

The present invention will be further elucidated hereinbelow with reference to the annexed drawing, in which:
- figure 1: shows schematically a portion of an extrusion pipe as applied in the method according to the present invention, and
- figure 2: shows schematically a cross-section of a food product obtained using the method according to the present invention.

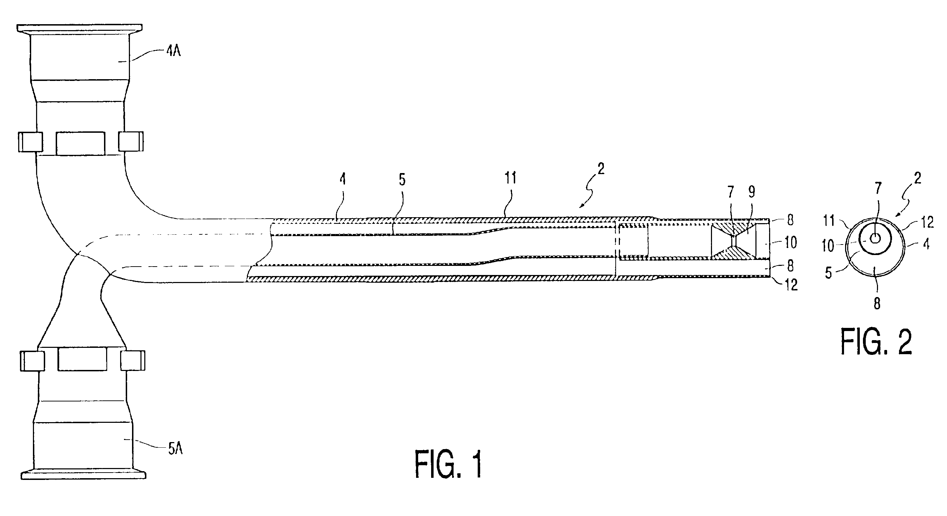

Figure 1 shows schematically a portion of an extrusion pipe 2 which can be applied in the method according to the present invention. This pipe 2 comprises an outer pipe 4 and an inner pipe 5. As shown clearly in the figure, pipes 4 and 5 are initially separate pipes 4A respectively 5A, which are each connected to displacing or pumping means not further shown in the figure which are separately adjustable. A constriction or venturi tube 7 is arranged in pipe 5.

A flow of food product which flows from pipe 5A through pipe 5 will be forced through constriction 7 and leave the pipe at 10 as a food product with randomized fibres. Food product flowing from pipe 4A through pipe 4 will leave this pipe at 8 as food product with aligned fibres. As can be seen from the disposition of outlets 8 and 10, the part of the food product with randomized fibres is completely enclosed by food product with aligned fibres. The part of the food product with randomized fibres is moreover positioned eccentrically in the string of food product.

Figure 2 shows the cross-section of a food product 11 obtained using the method according to the present invention. Food product 11 comprises an eccentrically placed core of food product with randomized fibres 12 which are enclosed by food product with aligned fibres. Reference numeral 15 indicates the casing of the food product, which preferably comprises a collagen layer co-extruded with the food product.

As set out in the foregoing, the different arrangement of the fibres in the food product can also be reversed, wherein food product with aligned fibres forms the core which is enclosed by food product with randomized fibres.

## Claims

1. Method for manufacturing an extruded food product, in particular sausage, wherein a food product is extruded such that the fibres of a first part thereof are randomized, while the fibres of a second part are substantially aligned, **characterized in that** one of the parts is enclosed by the other part and that the enclosed part is positioned substantially eccentrically.

2. Method as claimed in claim 1, **characterized in that** the first part (12) is substantially enclosed by the second part (14).

3. Method as claimed in claim 1 or 2, **characterized in that** the ratio of food product with random fibres (12) to food product with aligned fibres (14) amounts to 1:1.5 to 1:10.

4. Method as claimed in one or more of the foregoing claims, **characterized in that** the first part and the second part of the food product are supplied separately.

5. Method as claimed in claim 4, **characterized in that** supply speeds of the first part and the second part can be adjusted separately.

6. Method as claimed in one or more of the foregoing claims, **characterized in that** the food product is provided all around with a collagen layer (15) by means of coextrusion.

7. Device for manufacturing extruded food products, in particular sausage, at least comprising extrusion means for forming a continuous string of a food product, which extrusion means comprise at least one pipe (2) which is coupled to displacing means, **characterized in that** the pipe (2) comprises an outer pipe (4) and an inner pipe (5) and in that the outer pipe (4) and the inner pipe (5) are initially separate pipes (4A, 5A).

8. Device as claimed in claim 7, **characterized in that** the inner pipe (5) comprises a constriction (7).
